# FASCICULE DE BREVET EUROPEEN

(11) **EP 0 637 523 B1**
(45) Date de publication et mention de la délivrance du brevet: **03.06.1998**
(21) Numéro de dépôt: 94470024.4
(22) Date de dépôt: 05.08.1994
(51) Int. Cl.: B60P 3/025

(54) **Salle polyvalente mobile et remorque de transport à caisse télescopique**
Beugbarer Mehrzweckraum und Anhänger zum Transport von einem teleskopischen Kasten
Polyvalent mobile hall and trailer for transporting a telescopic body

(30) Priorité: 06.08.1993 FR 9309845
(43) Date de publication de la demande: 08.02.1995
(73) Titulaire: ARTECA INITIATIVES ARTISTIQUES (Association loi 1901), F-54320 Maxeville (FR)
(72) Inventeur: Breton, Yves, F-54000 Nancy (FR); Salzgeber, Didier, F-54510 Art Sur Meurthe (FR)
(74) Mandataire: Poupon, Michel

(56) Documents cités:
- EP-A- 0 317 357
- DE-A- 3 329 620
- FR-A- 2 171 615
- FR-A- 2 318 761
- FR-A- 2 347 230
- GB-A- 705 374
- GB-A- 2 256 373
- PATENT ABSTRACTS OF JAPAN vol. 8, no. 140 (M-305) (1577) 29 Juin 1984 & JP-A-59 038 145 (KOIZUMI SANGYO) 1 Mars 1984

## Description

La présente invention concerne un salle polyvalente mobile et une remorque pour le transport d'une telle salle selon les caractéristiques des préambules des revendications indépendentes 1 et 9.

Il existe à l'heure actuelle différents types de salles de spectacles itinérantes.

Par exemple, celle du document FR 2 171 615 qui est entièrement construite sur site autour de sa remorque de transport, laquelle ne contient que les pièces techniques et sanitaires ; les opérations de montage et démontage sont longues et l'usage de la salle est limité à la projection cinématographique.

On décrit dans le document FR 2 467 107 une salle itinérante polyvalente à ridelles rabattables pour l'extension du plancher, les fermetures latérales se déploient par des systèmes d'arceaux pivotants, limitant l'espace disponible et la capacité en nombre de spectateurs, et rendant impossible l'accouplement de deux ou plusieurs remorques entre elles.

On connaît également les documents FR 2 347 230 et GB-705.374. Les dispositifs décrits n'offrent pas une hauteur, ni une résistance au vent suffisantes, de plus ils nécessitent des poutres ou montants de soutènements supplémentaires et ils n'offrent pas une récelle polyvalence puisque la remorque du document FR 2 347 230 n'est pas connectable et celles du document GB-705.374, formant l'état de la technique le plus pertinent, sont différentes selon qu'elles constituent la partie centrale ou les parties terminales de la salle, et ils ne permettent pas de soulever ou abaisser d'un bloc la toiture.

La présente invention vise à concevoir une salle réellement polyvalente, c'est-à-dire adaptée à tous types de spectacles (expositions, réunions et autres), dont les dimensions et la capacité sont du même ordre de grandeur que celles des constructions fixes, et dont le cahier des charges remplit toutes les normes de sécurité des salles polyvalentes fixes. De plus, on s'est imposé d'utiliser, pour le transport de cette salle, des remorques porteuses polyvalentes standard.

L'objectif recherché est une décentralisation culturelle dans le monde rural avec des contraintes de coût et d'installation rivalisant avec celles des salles polyvalentes fixes, tout en respectant les normes de sécurité qui leur sont appliquées.

Pour atteindre cet objectif, la demanderesse a conçu une remorque pour le transport et la construction d'une salle polyvalente mobile et de ses équipements, dont la toiture peut être soulevée et abaissée d'un bloc par des systèmes de levage grâce à une combinaison de moyens transmettant tous les efforts dus à la toiture sur le châssis de la remorque.

Conformément à l'invention, une remorque pour le transport et la construction d'une salle polyvalente mobile et de ses équipements du type formée d'une caisse télescopique construite sur un châssis, ladite caisse étant composée de :
- une caisse inférieure porteuse formée de deux pignons fixes à l'avant et à l'arrière, de deux ridelles latérales articulées sur la plate-forme de la remorque, de pignons rabattables rigides et articulés sur une extrémité d'une ridelle latérale, de quatre systèmes de levage disposés aux quatre coins du châssis.
- une caisse supérieure formée d'un ensemble toit télescopique, deux rehausses de pignon à l'avant et à l'arrière et deux panneaux latéraux ou rehausses de ridelles de part et d'autre, articulés sur le toit et pouvant s'ouvrir latéralement, la caisse supérieure étant conçue pour être déplaçable verticalement dans les deux sens entre une position basse qui permet d'obtenir la configuration routière en rabattant les rehausses de ridelles afin de recouvrir extérieurement la caisse inférieure, et une position haute pour obtenir la configuration d'utilisation en ouvrant les rehausses de ridelles,
   se caractérise en ce que :
   - le châssis supportant la structure est un châssis standard,
   - le toit, les rehausses de ridelles, les pignons et rehausses de pignons sont réalisés en panneaux rigides,
   - quatre systèmes de levage du toit télescopique sont disposés aux quatre coins du châssis et leurs mouvement ascendant ou descendant sont synchronisés,
   - des fixations sont prévues sur les systèmes de levage pour la fixation de deux fermes, lesdites fermes étant installées sur site pour assurer la liaison entre toits télescopiques et servir d'appui à des panneaux de toiture,
   - des fixations sont prévues sur les rehausses de ridelle pour des demi-fermes repliées pendant le transport et dépliables sur site pour la construction d'avancées.

Une salle polyvalente mobile conforme à l'invention se caractérise en ce qu'elle est constituée en combinaison de :
- plusieurs remorques standards identiques selon l'une des revendications précédentes et dont les toits télescopiques sont déployés et reliés entre eux par des fermes fixées aux systèmes de levage des toits,
- une structure tubulaire installée sur les fermes pour porter une toiture souple de liaison entre les toits télescopiques de deux remorques voisines,
- des avancées portées par les demi-fermes prévues sur les rehausses de pignons,
- l'ensemble des efforts dus aux toits télescopiques, ferme, demi-ferme, toiture souple de liaison, avancées, étant supportés par les châssis des remorques.

On comprendra mieux l'invention à l'aide de la description qui suit faite en référence aux figures annexées suivantes :
- **figures 1a à 7a** : scénario de montage d'une salle selon l'invention à partir de deux remorques, celles-ci étant représentées en vue d'extrémité,
- **figures 1b à 7 b** : même scénario de montage que ci-dessus, les remorques étant représentées en vue de côté,
- **figure 8** : vue générale d'une salle selon l'invention,
- **figure 9** : croquis montrant le principe des rallonges de ridelles,
- **figures 10a, 10b, 11a, 11b, 12a, 12b** : exemples non limitatifs de configurations adaptées à l'utilisation,
- **figure 13** : schéma montrant le rangement du matériel scénique dans les deux remorques,
- **figure 14** : schéma montrant l'utilisation de passerelles porte-caissons.

Pour la compréhension de l'invention, on décrit dans un premier temps les éléments principaux constitutifs et dans un deuxième temps, en référence aux figures (1a, 1b à 7a, 7b,) les différentes étapes du montage d'un exemple de salle polyvalente conforme à l'invention.

Les éléments principaux dans la réalisation d'une salle polyvalente (1) sont les suivants :
1. Une ou plusieurs remorques (2) comportant
   (a) une caisse extérieure (4) formée d'un ensemble toit télescopique (1), rehausses de pignons (11) et rehausses de ridelles (6) :
      - chaque caisse de remorque (4) comporte un toit (7) et deux rehausses de pignons (11) à l'avant et à l'arrière et deux panneaux latéraux ou rehausses de ridelles (6), de part et d'autre, articulés sur le toit (7) et s'ouvrant hydrauliquement pour obtenir une toiture (l'articulation est réalisée par charnières étanches). Chaque rehausse de ridelles est équipée de quatre rails transversaux (13) pour l'accrochage et le positionnement à la demande des poutres d'éclairage. L'ensemble du toit, rehausses de ridelle et rehausses de pignon, est monté sur un système de levage approprié, pour que l'ensemble s'élève à 5,30m du niveau de la plate-forme de la remorque. Le toit (7), les rehausses de ridelles (6) et de pignons (11) sont réalisés sous forme de cadre d'acier, comblé par un panneau sandwich approprié et répondant aux normes en vigueur. Les rehausses de pignons (11) présentent des ouvertures pour la fixation d'aérateurs (14) et sont équipées de chaque côté, de fixations pour des demi-fermes (15) qui permettront de construire en avancée des espaces d'accueil public et des loges. Les panneaux articulés prennent appui sur des pignons articulés (9) ou sur des poteaux. En configuration routière, la caisse (4) est en position basse et fermée et elle couvre les éléments (b) ci-après ainsi que le matériel transporté.
   (b) une caisse inférieure formée de ridelles latérales (5), pignons fixes (8), et pignons articulés (9) :
      - l'ensemble de la caisse (4) en position haute, fait apparaître les pignons fixes (8) (en panneaux sandwich) à l'avant et à l'arrière des remorques et libère deux ridelles latérales (5) articulées sur les plates-formes de chaque remorque. Les ridelles sont articulées par des vérins, passant ainsi de la position verticale à la position horizontale, elles sont maintenues vérouillées par des bielles de stabilisation et sont en appui sur des béquilles de stabilisation réglables pour obtenir un plancher d'une largeur de 8m. Les ridelles (5) sont réalisées sous forme d'un cadre et de traverses en acier soudé et recouvertes de panneaux en contre-plaqué de tenue mécanique permettant toutes les utilisations prévues et répondant aux normes en vigueur.

   Par exemple sur un coté de chaque remorque : la ridelle (5) porte à chaque extrémité un pignon rabattable (9) (panneaux sandwich), équipé d'une porte anti-panique et positionné verticalement lorsque le toit télescopique est en position haute. Ces deux pignons (9) servent d'appui au panneau toiture qui articulera sur ce coté et sur l'autre côté de chaque remorque. Une ridelle (5) articulée peut être, en position horizontale réglable en hauteur par exemple à + ou - 0,80m par rapport à la plate-forme fixe de la remorque. En option, une ridelle peut être équipée d'une rallonge de largeur prédeterminée articulée à son extrémité permettant d'augmenter la largeur du plancher.
2. Un plancher intermédiaire (28) : les ridelles (5) sont bordées par des rives équipées de points d'arrimage pour la fixation d'un plancher central faisant la jonction entre les deux plates-formes deployées des remorques. Ce plancher prend appui au centre sur deux rangées de béquilles réglables pour varier son positionnement en hauteur.
3. Un ensemble de cloisons et toiture souple : les cloisons souples par exemple référencées (12, 17, 21) sont constituées de deux toiles enfermant un isolant (résistantes à la charge et au vent). En bordure haute (25), elles sont équipées de galets et bordure basse (26), de tendeurs à excentrique pour réaliser une forte tension capable de résiter aux charges et au vent selon le cahier des charges. Ces cloisons sont réalisées en plusieurs morceaux pour faciliter la manutention et reliées entre elles par des fermetures à glissières.
   La toiture souple (18) faisant la liaison entre les toits télescopiques, repose sur une structure tubulaire en alu fixée aux extrémités sur deux fermes (16) boulonnées au système de levage du toit télescopique garantissant une liaison rigide entre les deux remorques et servant d'appui pour les panneaux toitures (18). La fixation se fait par sandow.
   Les pignons souples (17) sont équipés de porte anti-panique en dur et fixés en bordure haute sur les fermes centrales (16).
4. Des structures en avancée formant accueil public (19) et loge d'artistes.
   Sur chaque pignon en dur est monté un ensemble en structure tubulaire (79) recouvert en bâche (20) présentant des portes de passage à fermeture à glissière. La toiture de chaque ensemble est une structure tubulaire en alu fixée aux extrémités sur deux demi-fermes (15) boulonnées aux rehausses de pignon (11).
   Les bâches des toitures sont soudées aux bordures hautes des bâches du pignon (17).
   Les fermes, demi-fermes, cloisons souples et bâches sont mises en place lorsque le toit télescopique est en position basse.
5. Un ensemble hydraulique : chaque semi-remorque est équipé d'un groupe électrogène de 9KVA minimum assurant l'autonomie électrique. Les commandes des fonctions hydrauliques se font à distance par télécommande.
6. Des aménagements ; on prévoit notamment :
   - habillage intérieur de toutes faces rigides par un revêtement accoustique répondant aux normes,
   - installation d'un double toilette chimique et lavabo avec reserve d'eau propre et usée sur une remorque, et d'un toilette, d'une douche, d'un lavabo dans l'autre remorque,
   - chauffage par air pulsé,
   - climatisation possible en option,

On se reporte à présent aux figures (1a à 7a) et (1b à 7b) qui montrent les étapes de montage d'une salle polyvalente (1) à partir de deux remorques (2) dont on verra plus loin qu'elle peut avoir d'autres configurations que celle présentée ici à titre d'exemple non limitatif.

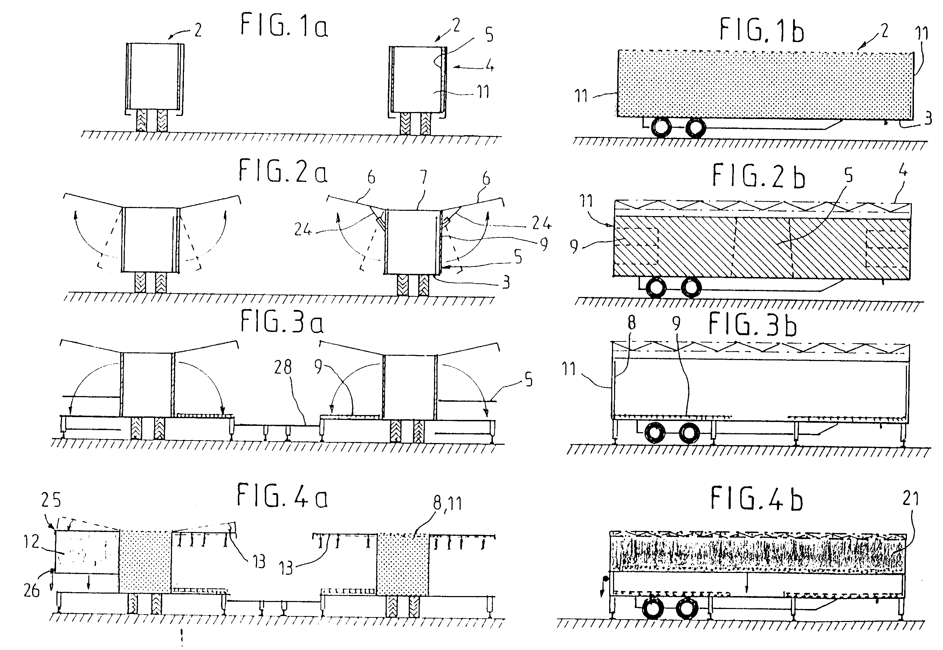

- **figure 1a et 1b** : positionnement des remorques. Chaque remorque (2) est représentée en configuration routière en figures (1a) et (1b) et elle est formée d'un châssis classique (3) avec une structure extensible et déployable, formée d'une caisse de remorque (4) enfermant en position routière des ridelles latérales articulées (5) sur les longerons latéraux du châssis (3), et fermée à l'avant et à l'arrière par deux rehausses de pignons (11).

Deux remorques (2) conformes à l'invention sont positionnées parallèlement à une distance prédéterminée, par exemple 9,60 m.
- **figures 2a et 2b** : développement de la toiture. Les caisses de remorques (4) comportent un toit (7), deux rehausses de pignons (11) l'une à l'avant et l'autre à l'arrière, et deux rehausses de ridelles (6) qui s'ouvrent hydrauliquement pour dégager deux ridelles latérales (5).

Les toits (7) sont réalisés sous la forme de deux poutrelles en treillis soudés portant des panneaux sandwich et les rehausses de pignons (11), de même nature que les toits, présentent des ouvertures pour les fixations d'aérateurs (14).

Latéralement de chaque côté, les rehausses de ridelles (6) sont manoeuvrées par des vérins hydrauliques (24) et leur articulation est réalisée par des charnières étanches.

Les rives extérieures des rehausses de ridelles (6) présentent des rails pour la fixation de bâches (12) décrites plus loin.
- **figures 3a et 3b** : mise en place des béquilles et du plancher central.

Les ridelles sont abaissées en figures (3a) et (3b), installées dans la position horizontale choisie puis maintenues et verrouillées par des bielles de stabilisation, elles sont en appui sur le sol par l'intermédiaire de béquilles de stabilisation réglables à vis.

Les ridelles latérales (5) sont articulées et réglables en hauteur par exemple entre deux positions minimale et maximale distantes de 0,80 cm (non limitativement) autour du niveau du plancher du châssis.

Les ridelles (5) sont réalisées sous la forme d'un cadre et de traverses en acier soudé, recouvertes de panneaux de tenue mécanique répondant au cahier des charges et au classement au feu.

Les ridelles (5) portent à chaque extrémité des pignons articulés (9) rabattables sur l'intérieur de la ridelle (figures 2a, 2b) et amenés en position horizontale en même temps que la ridelle (figure 3a, 3b).

Ces pignons articulés (9) sont de même nature que les pignons fixes (8), ce sont des structures en panneaux rigides par exemple des panneaux sandwich recevant les portes d'accès (10) de la salle polyvalente répondant aux normes de sécurité des issues de salles de spectacles. :
- **figures 4a et 4b** : mise en place des cloisons souples et poutres d'éclairage prééquipées.

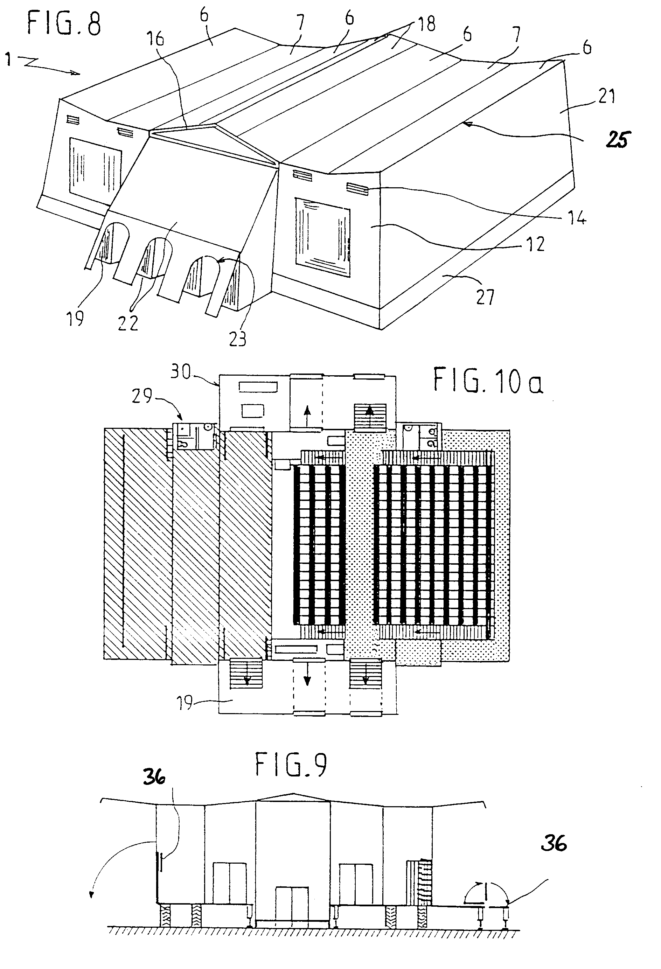

Les bâches de cloisons (12 et 21) sont constituées de toiles isolantes de type commun. En bordure haute (25), les bâches (12 et 21) sont équipées de galets et en bordure basse (26) de tendeurs à excentrique pour réaliser une forte tension capable de résister aux charges et au vent selon le cahier des charges (voir aussi figure 8). De préférence, pour faciliter la manutention, les bâches sont réalisées en plusieurs morceaux reliables par fermetures à glissières.

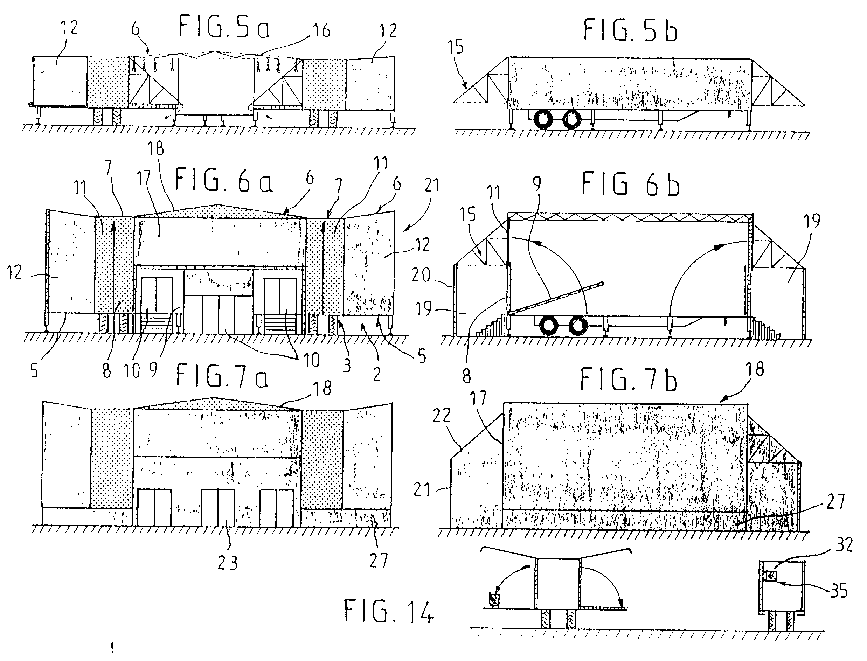

- **figures 5a et 5b** : déploiement vers l'extérieur de demi-fermes (15) solidaires des rehausses du pignon (11) et installation des fermes centrales (16) reliant les deux remorques.

Les demi-fermes (15) étaient repliées à l'intérieur de la remorque pendant le transport.

Les fermes centrales (16) garantissent la liaison entre les remorques, elles sont boulonnées au montage sur les systèmes de levage et servent également d'appui aux réhausses de ridelles et de fixation pour des bâches verticales de pignons (17) et des bâches de toitures (18).
- **figures 6a, 6b** : levage de toute la partie haute de la salle polyvalente réalisé par quatre systèmes de levage aux quatre coins du châssis. Différents systèmes de levage connus sont possibles, par exemple des systèmes à vis sans fin disposés dans un poteau en forme de C, porté en haut sur des butées à billes et entraîné en rotation par un moteur hydraulique. Dans le poteau coulisse une fourche portant la charge, et on prévoit de synchroniser les mouvements des vis.

Les demi-fermes (15) ont coulissées vers le haut dans des rails latéraux verticaux des pignons fixes (8), on peut déployer les pignons articulés (9) portant les portes (10).
- **figures 7a, 7b** : habillage des murs loges/accueil et fixation des bavettes.

Des structures formant avancées sont formées de bâches de loges (22) non isolées, installées sur les demi-fermes (15) et sur une structure tubulaire (20), elles peuvent servir à l'accueil du public ou de loge pour les artistes.

Des bâches de pignons (17), bâches de toiture (18), bâches latérales (21) ont été déployées pour fermer complètement la salle. Les bâches de loges (22) sont fixées aux fermes centrales et présentent à l'avant plusieurs portes (23).

On termine par la mise en place de bavettes d'étanchéité (27).

Selon la taille et l'utilisation prévue de la salle polyvalente, on pourra utiliser séparément ou en combinaison toutes les options ou variantes ci-après :
- ridelles latérales réglables en hauteur ou non,
- utilisation d'une remorque ou deux, trois ou plus,
- utilisation ou non d'une structure avancée formant loge ou accueil public,
- ridelles latérales extensibles pour augmenter la portée des planchers comme sur les exemples des figures 9 à 12 qui montrent des rallonges (36) rabattables, déployées à l'horizontale et portées par des béquilles lors de l'utilisation.

Par ailleurs, par le jeu des équipements intérieurs du matériel transporté, et des cloisonnements intérieurs optionnels, on pourra composer des salles en fonction de l'utilisation souhaitée.

A titre d'exemple non limitatif, on a représenté en figures (10a à 12b) différents exemples de configurations pour des utilisations en théâtre-danse à spectacle frontal ou bifrontal, concert rock-variétés, conférence-exposition. On voit que la partie centrale basse peut utiliser le sol ou un plancher surélevé (28) à hauteur variable selon l'utilisation.

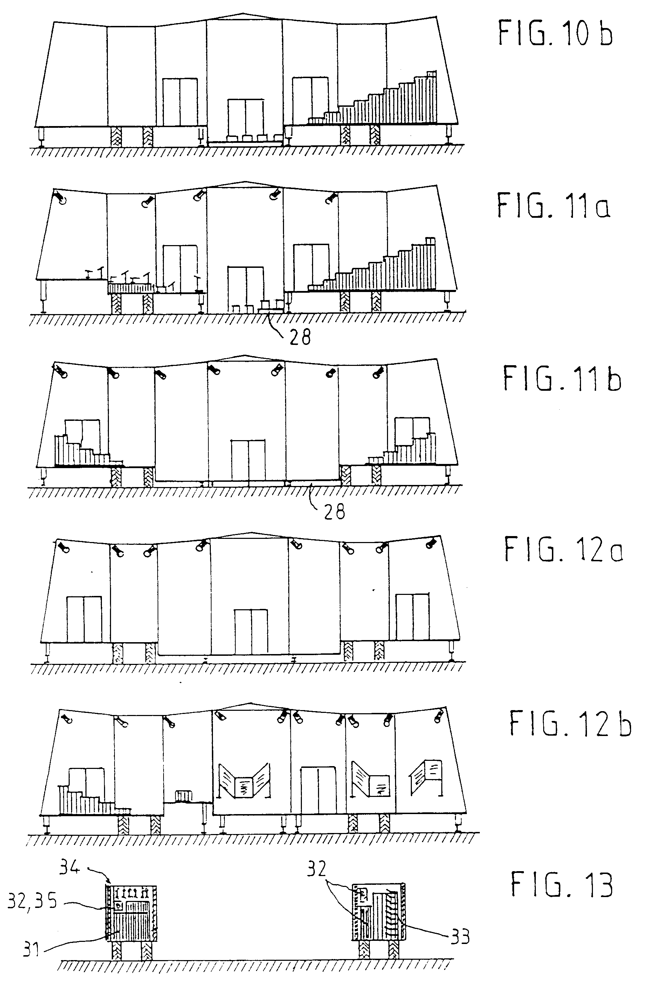

Sur la figure 10a on voit l'emplacement d'un bloc sanitaire (29) en bout de remorque et l'utilisation des avancées pour les loges (30) d'artistes et l'entrée du public (19).

La qualité des matériaux employés et notamment des planchers permet d'utiliser la salle pour des spectacles de danse.

On prévoit des installations de chauffage , climatisation et éclairage en option et on les dispose par exemple sur les rails ou sur les fermes.

Par ailleurs (voir figures 13 et 14) tout le matériel scénique (31) formé de loges, de caissons de rangement (32), gradins par exemple des gradins télescopiques (33), poutres d'éclairage (34) et autres sont rangés rationnellement dans la remorque en position de transport, il n'est donc pas nécessaire de prévoir un véhicule suplémentaire pour le transport du matériel comme c'est le cas dans l'art antérieur.

De plus on peut prévoir en partie haute des ridelles (5) des passerelles (35) porte-caissons (32).

Les avantages et performances de l'invention sont nombreux et notamment :
- utilisation de châssis standard de remorques,
- temps d'installation réduit (exemple six heures à quatre personnes pour deux remorques),
- transport de tout le matériel scénique,
- économie de manutention,
- autonomie de la salle au niveau énergie par groupe électrogène et au niveau sanitaire,
- résistance au vent sans haubanage, contrairement aux salles fermées sous chapiteau,
- double fonction des caisses supérieures (4) caisse de remorque en position transport et toiture en position utilisation,
- double fonction du réglage en hauteur des ridelles facilité de chargement du camion, positionnement d'un plancher,
- légèreté de l'ensemble favorisant le transport,
- hauteur du plafond réglable,
- toute la surface de la salle pouvant être sur plancher.
- modulation de l'espace intérieur et également en position abaissée, un chargement/déchargement très facile d'éléments lourds ou volumineux (rôle de hayon hydraulique de chargement avec un seuil de chargement de 30 centimètres),
- rehausses de ridelle équipées de poutres techniques (l'ensemble faisant office de "gril" technique),
- hauteur importante (5,50m réellement utilisable à l'intérieur de la totalité de la salle). Cette hauteur pouvant être modulée et réglée en continu en agissant sur le niveau d'élévation du toit ou sur le niveau des planchers (ridelles inférieures) réglables,
- passerelles porte-caissons intégrées aux ridelles,
- combinaison particulière d'éléments rigides articulés (ossature de la salle) et d'éléments souples, mobiles (bâches-composites), l'intérêt est la simplicité du montage, la limitation du nombre de pièces mécaniques "fragiles", le peu d'élèments intérieurs de type cloisons, les renforts de structures..., réduisant ainsi l'encombrement de la remorque en position transport),
- cloisons souples avec mécanisme de tension intégré (résistance mécanique au vent). Conception particulière de type "sandwich" pour isolation thermique et phonique,
- portes anti-panique intégrées à la structure (ridelles d'extrémité rabattables),
- une circulation possible du public par Entrées/Sorties indépendantes, de part et d'autre des remorques, les normes de sécurité relatives aux sorties du public pour plus de 500 personnes (en configuration salle de spectacle, trois sorties public plus une sortie artistes/techniciens de 1,80m chacune et de type anti-panique à double battant,
- espaces "annexes" tels que espace d'accueil public, loges, espace billetterie en avancées par rapport à la salle en elle-même, ce qui évite d'encombrer le volume intérieur de celle-ci,
- l'ensemble de la salle et des éléments annexes se met en place en position basse et permet un travail à "hauteur d'homme" (installation des bâches, des fermes du toit, des espaces "annexes" décrits ci-dessus). Il en est de même des équipements (éclairage, sonorisation, décors...) et aménagements intérieurs de la salle qui peuvent être faits en position basse. L'ensemble du dispositif est mis en position haute (position d'utilisation) en fin de montage,
- sanitaires : dans chaque remorque est prévue l'installation d'un bloc sanitaire intégré dès sa conception, cet équipement est "fixe" et ne nécessite aucune installation lors du montage de la salle polyvalente mobile,
- stabilité : en position installé/fixe, l'ensemble du dispositif est stabilisé au niveau des remorques qui reposent sur des béquilles télescopiques à l'avant et à l'arrière, et intégré aux châssis,
- la conception même des remorques fait que le dispositif n'est dédié a priori à aucune utilisation particulière. Le dispositif est complètement "neutre". Il en est de même de chacune des remorques qui sont complètement "interchangeables" et indépendantes les unes des autres bien que "connectables",
- planchers de type parquet de danse,
- occultation complète et traitement intérieur des matériaux (noir antireflet),
- plafond technique (poutrelles pour accrochages des divers éléments scéniques, pré-câblage...),
- dispositif de gradin télescopique pouvant être installé à demeure, et transportable dans les remorques en position repliée,
- prise en compte intégrale des normes de sécurité des équipements fixes (théâtres...) et des équipements mobiles et provisoires.

## Revendications

1. Remorque pour le transport et la construction d'une salle polyvalente mobile et de ses équipements du type formée d'une caisse télescopique construite sur un châssis, ladite caisse étant composée de :
- une caisse inférieure porteuse formée de deux pignons fixes à l'avant et à l'arrière, de deux ridelles latérales (5) articulées sur la plate-forme de la remorque, de pignons rabattables (9) rigides et articulés sur une extrémité d'une ridelle latérale (5), de quatre systèmes de levage disposés aux quatre coins du châssis.
- une caisse supérieure (4) formée d'un ensemble toit télescopique (1), deux rehausses de pignon (11) à l'avant et à l'arrière et deux panneaux latéraux ou rehausses de ridelles (6) de part et d'autre, articulés sur le toit (7) et pouvant s'ouvrir latéralement, la caisse supérieure (4) étant conçue pour être déplaçable verticalement dans les deux sens entre une position basse qui permet d'obtenir la configuration routière en rabattant les rehausses de ridelles (6) afin de recouvrir extérieurement la caisse inférieure, et une position haute pour obtenir la configuration d'utilisation en ouvrant les rehausses de ridelles (6),
caractérisée en ce qu'en combinaison :
- le châssis supportant la structure est un châssis standard,
- le toit (7), les rehausses de ridelles (6), les pignons et rehausses de pignons (8,11) sont réalisés en panneaux rigides,
- quatre systèmes de levage du toit télescopique sont disposés aux quatre coins du châssis et leurs mouvement ascendant ou descendant sont synchronisés,
- des fixations sont prévues sur les systèmes de levage pour la fixation de deux fermes (16), lesdites fermes étant installées sur site pour assurer la liaison entre toits télescopiques et servir d'appui à des panneaux de toiture (18),
- des fixations sont prévues sur les rehausses de ridelle (6) pour des demi-fermes (15) repliées pendant le transport et dépliables sur site pour la construction d'avancées.

2. Remorque selon la revendication 1, caractérisée en ce que les pignons rabattables (9) sont équipés d'une porte anti-panique.

3. Remorque selon la revendication précédente, caractérisée en ce que l'une au moins des ridelles latérales (5) est réglable en hauteur et en ce que les systèmes de réglage en hauteur du toit et des ridelles latérales sont prévus pour atteindre une hauteur sous plafond de 5,50 mètres.

4. Remorque selon l'une des revendications précédentes, caractérisée en ce que l'une au moins des ridelles latérales (5) comporte une rallonge (36).

5. Remorque selon l'une des revendications précédentes, caractérisée en ce que les ridelles (5) sont bordées par des rives équipées de points d'arrimage pour la fixation d'un plancher central (28).

6. Remorque selon l'une des revendications précédentes, caractérisée en ce que les pignons (8) comportent des rails latéraux verticaux pour le coulissement des demi-fermes (15).

7. Remorque selon l'une des revendications précédentes, caractérisée en ce qu'elle est équipée de gradins télescopiques.

8. Remorque selon l'une quelconque des revendications précédentes, caractérisée en ce que les ridelles (5) sont équipées de passerelles (35) porte-caissons (32).

9. Salle polyvalente mobile construite à partir d'au moins une remorque de transport, d'un ensemble de cloisons et toitures souples, d'aménagements tels que notamment installations toilettes, chauffage, gradins, cloisons séparatrices ou périphériques, salle du type comportant :
- au moins un plancher intermédiaire réglable en hauteur et faisant la jonction entre les plates-formes de deux remorques successives,
- une pluralité de cloisons souples telles que les cloisons (12,17,21) fermant la périphérie de la salle polyvalente.
et caractérisée en ce qu'elle est constituée en combinaison de :
- plusieurs remorques standards identiques selon l'une des revendications précédentes et dont les toits télescopiques sont déployés et reliés entre eux par des fermes (16) fixées aux systèmes de levage des toits,
- une structure tubulaire installée sur les fermes (16) pour porter une toiture souple (18) de liaison entre les toits télescopiques de deux remorques voisines,
- des avancées portées par les demi-fermes (15) prévues sur les rehausses de pignons,
- l'ensemble des efforts dus aux toits télescopiques, ferme (16) demi-ferme (15), toiture souple de liaison (18), avancées, étant supportés par les châssis des remorques.

10. Salle polyvalente mobile selon la revendication précédente, caractérisée en ce qu'elle comporte sur un même côté trois portes anti-panique à double battant pour la circulation du public.

11. Salle polyvalente selon la revendication précédente, caractérisée en ce qu'elle comporte en outre des structures en avancées, formant accueil public et loge artistiques, formées de structure tubulaire recouverte de bâches.

## Claims

1. Trailer for the transportation and the construction of a mobile multi-purpose auditorium and its fittings of the type formed by a telescopic body constructed on a chassis, said body comprising,
- a lower portable body formed from two fixed pinions at the front and at the rear, two lateral rails (5) pivotally mounted on the platform of the trailer, foldable pinions (9) which are rigid and pivotally mounted on one end of a lateral rail (5), and four lifting systems disposed at the four corners of the chassis; and
- an upper body (4) formed from a telescopic roof assembly (1), two pinion uprights (11) at the front and at the rear, and two lateral panels or rail uprights (6) on each side, which are pivotally mounted on the roof (7) and can be opened laterally, the upper body (4) being conceived to be vertically displaceable in the two directions between a low position, which permits the travel configuration to be obtained by folding back the rail uprights (6) in order to cover the lower body externally, and a high position to obtain the operational configuration by opening the rail uprights (6),
characterised in that, in combination,
- the chassis supporting the structure is a standard chassis;
- the roof (7), the rail uprights (6), the pinions and pinion uprights (8, 11) are made in rigid panels;
- four lifting systems for raising the telescopic roof are disposed at the four corners of the chassis, and their raising or lowering movements are synchronised;
- securing means are provided on the lifting systems for securing two trusses (16), said trusses being installed in situ to ensure the connection between telescopic roofs and to serve as a support for roofing panels (18); and
- securing means are provided on the rail uprights ( 5 ) for half-trusses (15), which are folded-up during transportation and unfoldable in situ, for the construction of projections.

2. Trailer according to claim 1, characterised in that the foldable pinions (9) are fitted with a anti-panic door.

3. Trailer according to the preceding claim, characterised in that at least one of the lateral rails (5) is adjustable in respect of height, and in that the systems for adjusting the height of the roof and of the lateral rails are provided to achieve a height of 5.50 metres to the ceiling.

4. Trailer according to one of the preceding claims, characterised in that at least one of the lateral rails (5) has a extension-piece (28).

5. Trailer according to one of the preceding claims, characterised in that the rails (5) are edged by flanges fitted with securing points for the securement of a central floor (28).

6. Trailer according to one of the preceding claims, characterised in that the pinions (8) comprise vertical lateral rails for the sliding of the half-trusses (15) therein.

7. Trailer according to one of the preceding claims, characterised in that it is fitted with telescopic tiers.

8. Trailer according to any one of the preceding claims, characterised in that the rails (5) are fitted with boxes (32) carrying gangways (35).

9. Mobile multi-purpose auditorium constructed from at least one transport trailer, an assembly of flexible partitions and roofs, and fittings such as, more especially, toilet installations, heating, tiers, dividing or peripheral partitions, an auditorium of the type comprising:
- at least one intermediate floor adjustable in height and forming the connection between the platforms of two successive trailers; and
- a plurality of flexible partitions such as the partitions (12, 17, 21) enclosing the periphery of the multi-purpose auditorium;
and characterised in that it comprises, in combination:
- a plurality of identical standard trailers according to one of the preceding claims, the telescopic roofs of which are deployed and interconnected by trusses (16) secured to the lifting systems for raising the roofs;
- a tubular structure installed on the trusses (16) to carry a flexible roof (18) for connecting the telescopic roofs of two adjacent trailers;
- projections carried by the half-trusses (15) provided on the pinion uprights; and
- all of the stresses, due to the telescopic roofs, truss (16), half-truss (15), flexible connecting roof (18) and projections, being borne by the chassis of the trailers.

10. Mobile multi-purpose auditorium according to the preceding claim, characterised in that it comprises, on one and the same side, three anti-panic double doors for public use.

11. Multi-purpose auditorium according to the preceding claim, characterised in that it also comprises projecting structures, which form the public entrance and artistes' dressing-rooms, formed from a tubular structure covered by awnings.

## Patentansprüche

1. Anhänger zum Transport und zum Errichten einer mobilen Mehrzweckhalle und deren Ausstattung, die aus einem auf einem Tragwerk aufgebauten ausfahrbaren Gehäuse gebildet ist, wobei sich das Gehäuse zusammensetzt aus
- einem unteren tragenden Gehäuse, das aus zwei vorne und hinten angebrachten Giebeln, zwei längsseitigen Seitenwänden (5), die an dem Unterbau des Anhängers angebracht sind, steifen und an den Enden einer längsseitigen Seitenwand (5) angebrachten, umlegbaren Giebeln (9) und vier an den vier Ecken des Tragwerkes angeordneten Hebesystemen gebildet ist,
- einem oberen Gehäuse (4), das gebildet ist aus einem ausfahrbaren Gesamtdach (1), zwei vorne und hinten vorgesehenen, sich gegenüberliegenden Giebelverstärkungen (11) und zwei seitliche Platten oder Seitenwandverstärkungen (6), die an dem Dach (7) angebracht und seitlich öffenbar sind, wobei das obere Gehäuse (4) dazu eingerichtet ist, vertikal in die beiden Richtungen in eine untere Stellung, die zum Erhalt der Transportkonfiguration unter Umlegen der Seitenwandverstärkungen (6) zum außenseitigen Bedecken des unteren Gehäuses dient, und in eine obere Stellung zum Erhalt der Benutzungskonfiguration unter Öffnen der Seitenwandverstärkungen (6) versetzbar ist,
**dadurch gekennzeichnet**, daß in Kombination
- das die Struktur stützende Tragwerk ein Standardtragwerk ist,
- das Dach (7), die Seitenwandverstärkungen (6), die Giebel und Giebelverstärkungen (8, 11) aus steifen Platten ausgeführt sind,
- an den vier Ecken des Tragwerkes vier Hebesysteme des ausfahrbaren Daches angeordnet und deren aufsteigende oder absteigende Bewegung synchronisiert sind,
- zum Befestigen von zwei Dachabschlüssen (16) an dem Hebesystem Befestigungen vorgesehen sind, wobei die Dachabschlüsse an Ort und Stelle zum Sicherstellen der Verbindung zwischen ausfahrbaren Dächern installiert werden und zum Abstützen von Dachbedeckungsflächen (18) dienen,
- an den Seitenwandverstärkungen (16) für Halbdachabschlüsse (15), die während des Transportes zusammengefaltet und an Ort und Stelle für das Errichten von Vorbauten entfaltbar sind, Befestigungen vorgesehen sind.

2. Anhänger nach Anspruch 1, dadurch gekennzeichnet, daß die umlegbaren Giebel (9) mit einer paniksicheren Tür ausgestattet sind.

3. Anhänger nach dem voranstehenden Anspruch, dadurch gekennzeichnet, daß eine wenigstens der längsseitigen Seitenwände (5) in der Höhe einstellbar ist, und daß die Höheneinstellsysteme des Daches und der längsseitigen Seitenwände dazu eingerichtet sind, eine Höhe über dem Boden von 5,50 Meter einzunehmen.

4. Anhänger nach einem der voranstehenden Ansprüche, dadurch gekennzeichnet, daß eine wenigstens der längsseitigen Seitenwände (5) eine Verlängerung (28) aufweist.

5. Anhänger nach einem der voranstehenden Ansprüche, dadurch gekennzeichnet, daß die Seitenwände (5) durch Randseiten begrenzt sind, die zum Befestigen einer Zentralplatte (28) mit Nutzlastbefestigungspunkten ausgestattet sind.

6. Anhänger nach einem der voranstehenden Ansprüche, dadurch gekennzeichnet, daß die Giebel (8) zum Gleiten von Halbdachabschlüssen (15) längsseitige vertikale Schienen aufweisen.

7. Anhänger nach einem der voranstehenden Ansprüche, dadurch gekennzeichnet, daß er mit ausfahrbaren Treppenstufen ausgestattet ist.

8. Anhänger nach einem der voranstehenden Ansprüche, dadurch gekennzeichnet, daß die Seitenwände (5) mit behältertragenden (32) Stegen (35) ausgestattet sind.

9. Mobile Mehrzweckhalle, die ausgehend von wenigstens einem Transportanhänger errichtet wird, mit einer Gesamtheit von flexiblen Trennwänden und Dachbedeckungen, mit Einrichtungen wie insbesondere sanitären Installationen, Heizung, Treppenstufen, abtrennenden oder umschließenden Trennwänden des Typs mit
- wenigstens einer Zwischenplatte, die in der Höhe einstellbar ist und die Verbindung zwischen den Unterbauten von zwei aufeinanderfolgenden Anhängern bildet,
- einer Vielzahl von flexiblen Trennwänden, wie die die Umfassung der Mehrzweckhalle bildenden Trennwände (12, 17, 21),
**dadurch gekennzeichnet**, daß sie in Kombination gebildet ist aus
- mehreren gleichartigen Standardanhängern gemäß einem der voranstehenden Ansprüche, bei denen die ausfahrbaren Dächer entfaltbar und untereinander durch an dem Hebesystem für die Dächer angebrachten Dachabschlüsse (16) verbunden sind,
- einer unterhalb der Dachabschlüsse (6) angebrachten Rohrstruktur zum Tragen eines flexiblen Verbindungsdaches (18) zwischen den ausfahrbaren Dächern zweier benachbarter Anhänger,
- Vorbauten, die durch die an den Giebelverstärkungen vorgesehenen Halbdachabschlüssen (15) angebracht sind,
- der Gesamtheit von für ausfahrbare Dächer vorgesehenen Mitteln, Dachabschluß (6), Halbdachabschluß (15), flexibles Verbindungsdach (18), Vorbauten, die durch die Tragwerke der Anhänger gestützt werden.

10. Mobile Mehrzweckhalle nach dem vorangehenden Anspruch, dadurch gekennzeichnet, daß sie an einer Seite drei zweiflüglige paniksichere Türen für den Publikumsverkehr aufweist.

11. Mehrzweckhalle nach dem vorangehenden Anspruch, dadurch gekennzeichnet, daß sie weiterhin Vorbaustrukturen aufweist, die zum Publikumsempfang und als Künstlergarderobe dienen, die aus durch Planen bedeckte Rohrstrukturen gebildet sind.
